# EUROPEAN PATENT SPECIFICATION

(11) **EP 4 447 184 B1**
(45) Date of publication and mention of the grant of the patent: **09.12.2026**
(21) Application number: 22952294.1
(22) Date of filing: 27.07.2022
(51) Int. Cl.: H01M 10/058, B21D 19/10, H01M 10/04, H01M 50/586, H01M 50/531, H01M 50/595, B21D 53/00

(54) **GUIDING AND SMOOTHING MECHANISM AND GUIDING AND SMOOTHING APPARATUS**
FÜHRUNGS- UND GLÄTTUNGSMECHANISMUS UND FÜHRUNGS- UND GLÄTTUNGSVORRICHTUNG
MÉCANISME DE GUIDAGE ET DE LISSAGE ET APPAREIL DE GUIDAGE ET DE LISSAGE

(43) Date of publication of application: 16.10.2024
(73) Proprietor: Contemporary Amperex Technology (Hong Kong) Limited, Central, Central And Western District (HK)
(72) Inventor: ZHU, Wenqi, Ningde, Fujian 352100 (CN); LI, Meng, Ningde, Fujian 352100 (CN)
(74) Representative: Jacob, Reuben Ellis
(86) International application number: PCT/CN2022/108140
(87) International publication number: WO 2024/020830

(56) References cited:
- CN-A- 112 072 058
- CN-A- 113 560 369
- CN-A- 114 700 393
- CN-U- 206 415 447
- CN-U- 207 955 135
- CN-U- 208 189 698
- CN-U- 209 953 538
- CN-U- 210 754 535
- CN-U- 211 100 916
- CN-U- 211 100 916
- CN-U- 216 872 076
- CN-U- 216 928 884
- JP-A- 2005 116 329

## Description

### Technical Field

The present application relates to the technical field of battery production, and more particularly, to a guide and flattening mechanism and a guide and flattening device.

### Background

During manufacturing of cylindrical battery cells, an annular tape is usually attached to a peripheral surface of an end, from which a tab protrudes, of a cylindrical electrode assembly, to reduce the risk of short circuit between the tab and a housing.

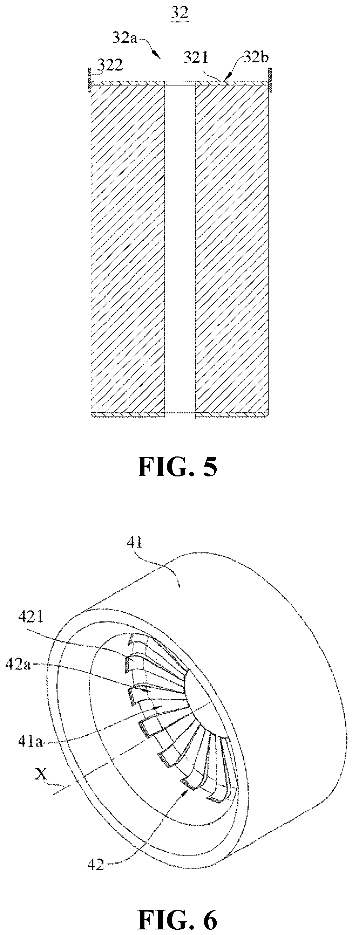

However, during the attachment of the annular tape, the annular tape will partially extend out of a circular end surface of the cylindrical electrode assembly that is provided with the tab in an axial direction of the cylindrical electrode assembly. Reference may be made to Fig. 5 for details. In this way, after mounting the cylindrical electrode assembly into the housing and performing a welding process between the housing and an end cover, there is a certain risk that the part of the annular tape that protrudes from the circular end surface with the tab is burned. This in turn seriously affects the yield of the cylindrical battery cells produced, and does not facilitate the improvement of the safety performance of the battery cells. Based on the above problems, the above problems can be better alleviated by bending, flattening and adhering the part of the annular tape that protrudes from an edge of the end of the cylindrical electrode assembly that is provided with the tab to the circular end surface at this end. However, manual bending and flattening of the annular tape is inefficient and difficult to ensure the yield. Document CN113560369A discloses a method for flattening the tabs of cylindrical lithium ion batteries. A wound cell is conveyed to a flattening machine where a rotating rubbing head presses an elastic, wear resistant, cup-shaped sleeve that fully covers the protruding tabs. The rotating head rolls on the sleeve, causing the sleeve to compress elastically and transmit a rolling force to the tabs, which are thereby bent and smoothed. After each cycle the head lifts, allowing the sleeve to elastically recover. Document CN206415447U discloses a tab shaping device for cylindrical lithium ion batteries. The device comprises a base and a shaping assembly that forms a circular array of concave ramps. Several bar keys are positioned in radial slots on the base; each bar key carries a first and second positioning protrusion and is linked to a spring. When the battery core is placed on a central positioning member, the shaping device moves toward the battery core, the springs press the bars into the tab, flattening and centering it uniformly. Documents CN114700393A, CN216928884U, CN211100916U disclose further examples of known devices for flattening tabs or tapes of battery electrode assemblies.

### Summary of the Invention

The present application provides a guide and flattening mechanism and a guide and flattening device, which can improve the operating efficiency and yield of bending and flattening of an annular tape attached to a cylindrical electrode assembly.

In a first aspect, the present application provides a guide and flattening mechanism for flattening a to-be-flattened member on a to-be-flattened end of a cylindrical electrode assembly, such that the to-be-flattened member is bent and abuts against a circular end surface of the to-be-flattened end, the to-be-flattened member being a part, which protrudes from the circular end surface, of an annular tape attached to a side wall of the cylindrical electrode assembly, or a tab on the to-be-flattened end that protrudes in an axial direction of the cylindrical electrode assembly, the guide and flattening mechanism including: a mounting seat having a support plane; and an elastic guide assembly arranged at the mounting seat and having an inclined surface; wherein the inclined surface is arranged around a central axis perpendicular to the support plane and is located on a side of the elastic guide assembly facing away from the support plane; from a side of the inclined surface close to the central axis to a side of the inclined surface away from the central axis, at least a part of the inclined surface is arranged obliquely in a direction away from the support plane; and the inclined surface is configured to be elastically deformed in a direction approaching the support plane when being squeezed in the direction approaching the support plane, so as to guide the bending of the to-be-flattened member and flatten the to-be-flattened member on the circular end surface with the cooperation of the support plane.

According to the guide and flattening mechanism of the present application, the elastic guide assembly is provided with an inclined surface, and the inclined surface is configured to be elastically deformed in a direction approaching the support plane when being squeezed in the direction approaching the support plane, so that in a process of squeezing the to-be-flattened end of the cylindrical electrode assembly against the inclined surface, the inclined surface can provide guidance for the to-be-flattened member, such that the to-be-flattened member is bent gradually toward the circular end surface of the cylindrical electrode assembly, until the inclined surface abuts against the support plane, at this time the inclined surface becomes flat, and the to-be-flattened member completely abuts against the circular end surface. In this way, where the to-be-flattened member is the part of the annular tape part that protrudes from the circular end surface, it is beneficial to improve the operating efficiency and yield of bending and flattening of the annular tape attached to the cylindrical electrode assembly. Moreover, for a corresponding subsequent cylindrical battery, by flattening the annular tape, an axial space occupied by the annular tape inside a battery cell can be reduced, facilitating the improvement of the energy density of the battery cell and reducing the risk of burning the annular tape during welding of an end cover to a housing, thereby facilitating the improvement of the safety performance of the battery cell while improving the product yield of battery cells. Where the to-be-flattened member is the tab of the cylindrical electrode assembly, the tab can be bent and compacted, in order to facilitate the smooth progress of the subsequent welding process of the tab.

In some embodiments, the elastic guide assembly includes a plurality of elastic pieces, the plurality of elastic pieces are arranged around the central axis, and the elastic pieces are each arranged obliquely in a direction away from the support plane from a first end of the elastic piece close to the central axis to a second end away from the central axis; and a surface of each elastic piece facing away from the support plane is formed with an inclined unit surface, and the inclined unit surfaces cooperate with each other to define the inclined surface. The elastic guide assembly is configured to include a plurality of elastic pieces, so that the simplification of the overall structure of the elastic guide assembly is facilitated while achieving the flattening effect on the to-be-flattened end of the cylindrical electrode assembly.

In some embodiments, the plurality of elastic pieces are arranged in a circular array around the central axis. In this way, the bending force received by the to-be-flattened member along its circumferential direction is relatively uniform, facilitating the smooth progress of the bending process of the to-be-flattened member.

In some embodiments, the elastic pieces are in the shape of a sector or an annular sector arranged in a circular array around the central axis. In this way, when at least a part of each elastic piece abuts against the support plane, it is convenient for the elastic piece and the support plane to cooperate with each other to jointly define a plane for squeezing the to-be-flattened member, so as to flatten the to-be-flattened member on the circular end surface.

In some embodiments, the number of elastic pieces is n, and a central angle corresponding to each elastic piece is α, where nα = 360°, and n is a positive integer greater than 1. When at least a part of each elastic piece abuts against the support plane and is arranged in the form of a plane, the parts of two adjacent elastic pieces that are in form of a plane are adjoined to each other, and the parts of the plurality of elastic pieces that are in form of a plane are adjoined to each other are enclosed to form a complete ring or circle. In this way, the elastic pieces and the abutment surface of the bent to-be-flattened member form a continuous plane as a whole, facilitating the improvement of the surface flatness of the to-be-flattened member after being flattened.

In some embodiments, the elastic piece includes a first sub-section and a second sub-section connected to each other; the first sub-section has the first end away from the second sub-section, the first sub-section is arranged obliquely in a direction away from the support plane from the first end to an end of the first sub-section connected to the second sub-section, and a first inclined sub-surface is formed on the first sub-section; the second sub-section has the second end away from the first sub-section, the second sub-section is bent relative to the first sub-section and extends a preset distance in a direction away from the support plane, and a second inclined sub-surface is formed on the second sub-section; wherein the second inclined sub-surface is connected to the first inclined sub-surface in a smooth-transition manner to form the inclined unit surface. In this way, when the to-be-flattened member passes through the smooth-transition area between the first sub-section and the second sub-section, the smooth-transition area can provide smooth guidance for the movement of the to-be-flattened member, so that the to-be-flattened member is gradually bent in the direction approaching the circular end surface more smoothly.

In some embodiments, the first end is a fixed end, the second end is a free end, and the elastic piece is configured to move the second end toward the support plane when being squeezed in a direction approaching the support plane. In this way, while realizing the guide and flattening effect of the elastic pieces on the to-be-flattened member, the simplification of the movement of the elastic pieces is facilitated, and the movement of the elastic pieces is more stable, thereby improving the stability and flattening effect of the guiding movement of the to-be-flattened member.

In some embodiments, the elastic guide assembly further includes a support shaft connected to the mounting seat, and the first ends of the plurality of elastic pieces are connected to a peripheral surface of the support shaft and are arranged evenly spaced apart from each other in a circumferential direction of the support shaft. In this way, the support shaft can provide a certain support function for the elastic pieces, and simplify the overall structure of the elastic guide assembly, thereby improving the stability of the deformation of the elastic pieces.

In some embodiments, the first end is a free end, the second end is a fixed end, and the elastic piece is configured to move the first end in a direction away from the central axis when being squeezed in a direction approaching the support plane. In this way, the overall structure of the elastic guide assembly can be simplified while achieving the flattening operation on the to-be-flattened member of the cylindrical electrode assembly. Moreover, during the operation of the elastic pieces, the improvement of the stability of the elastic deformation of the elastic pieces is facilitated, thereby improving the stability of the bending and flattening operations of the to-be-flattened member.

In some embodiments, among the plurality of elastic pieces arranged in a circular array, an included angle β between two adjacent elastic pieces satisfies: β ≤ 30°. In this way, the risk of wrinkles and poor flattening effect due to that a large area of the to-be-flattened member is not guided by the elastic pieces can be reduced.

In some embodiments, an edge portion of the second end is provided with a thinned area having a thickness increasing in a direction approaching the support plane along the central axis. When the to-be-flattened member moves relative to the thinned area, the thinned area can provide better guidance for the bending of the to-be-flattened member.

In some embodiments, he mounting seat includes an end plate and an enclosure portion, the end plate has the support plane, and the enclosure portion is arranged in an enclosing manner on a peripheral side of the support plane, so as to form a guide cavity for guiding the to-be-flattened end to move in a direction along the central axis. In this way, an inner wall of the enclosure portion can be used as a guide component for the movement of the to-be-flattened end along the central axis, so as to improve the coaxiality of the movement of the cylindrical electrode assembly in the direction along the central axis and improve the stability of the movement of the cylindrical electrode assembly relative to the inclined surface, thereby facilitating the improvement of the flattening effect of the elastic guide assembly on the to-be-flattened member.

In some embodiments, a guide portion is provided on a side of the enclosure portion away from the end plate, an inner wall of the guide portion encloses a tapered hole in communication with the guide cavity, and the tapered hole has an inner diameter gradually decreasing from a side of the guide portion away from the end plate to a side close to the end plate. In this way, it is helpful for the to-be-flattened end to enter the guide cavity smoothly, and during the passage of the to-be-flattened end through the guide portion, the guide portion can provide a certain guidance for the to-be-flattened end, so as to improve the smoothness of the to-be-flattened end entering the guide cavity.

In some embodiments, an avoidance groove is provided on an inner wall of an end of the enclosure portion connected to the end plate, and the avoidance groove is configured to avoid the elastic guide assembly when the inclined surface is pressed and deformed. It is convenient for the elastic pieces to abut against the support plane, so that the elastic pieces are arranged in the form of a plane, facilitating the smooth progress of the flattening operation of the to-be-flattened member.

In some embodiments, the dimension of the avoidance groove in the direction along the central axis is defined as h1; and the elastic guide assembly includes a plurality of elastic pieces, the plurality of elastic pieces are arranged around the central axis, and the elastic pieces are each arranged obliquely in a direction away from the support plane from a first end of the elastic piece close to the central axis to a second end away from the central axis; and a surface of each elastic piece facing away from the support plane is formed as an inclined unit surface, the inclined unit surfaces cooperate with each other to define the inclined surface, and thickness of the elastic piece is defined as h2, where h1 ≥ h2. It is convenient for the second end of each elastic piece to enter the avoidance groove, so as to realize the abutment of the elastic piece against the support plane.

In some embodiments, the support plane of the end plate is provided with a plurality of accommodating grooves arranged facing away from the inclined surface, and each of the accommodating grooves is in communication with the avoidance groove and configured to accommodate at least a part of the respective elastic piece. In this way, when the amount of deformation of the elastic piece reaches the maximum, at least a part of the elastic piece is accommodated in the accommodating groove, and the elastic piece cooperates with the support plane to squeeze the bent to-be-flattened member. Due to the existence of the accommodating groove, it is helpful to improve the cooperation between the elastic piece and the support plane to form a flatter squeezing surface to squeeze the to-be-flattened member more evenly, thereby improving the flatness of the to-be-flattened member after being squeezed.

In some embodiments, in the direction along the central axis, the depth of the accommodating groove is defined as h3, where h3 = h2. Where the elastic piece abuts against a bottom wall of the accommodating groove, the surface of the elastic piece is flush with the surface of the support plane, so that the surface of the cooperating elastic piece in contact with the bent to-be-flattened member and the support plane form a relatively smooth squeezing surface. The flattening effect of the to-be-flattened member is further improved.

In a second aspect, the present application provides a guide and flattening device, including a guide and flattening mechanism of any one of the embodiments in the first aspect.

Due to the use of the guide and flattening mechanism provided in some embodiments of the present application, the guide and flattening device provided in some embodiments of the present application have the same technical effects, which will not be described again here.

In some embodiments, the guide and flattening device further includes: a clamping mechanism configured to clamp the cylindrical electrode assembly such that the cylindrical electrode assembly and the elastic guide assembly of the guide and flattening mechanism move toward each other, so as to guide the bending of the to-be-flattened member by means of the inclined surface of the elastic guide assembly and flatten the to-be-flattened member on the circular end surface with the cooperation of the support plane. The provision of a clamping mechanism facilitates the improvement of the convenience of flattening operation of the to-be-flattened member of the cylindrical electrode assembly.

In the guide and flattening mechanism and the guide and flattening device provided in some embodiments of the present application, the elastic guide assembly is provided with an inclined surface, and the inclined surface is configured to be elastically deformed in a direction approaching the support plane when being squeezed in the direction approaching the support plane, so that in a process of squeezing the to-be-flattened end of the cylindrical electrode assembly against the inclined surface, the inclined surface can provide guidance for the to-be-flattened member, such that the to-be-flattened member is bent gradually toward the circular end surface of the cylindrical electrode assembly, until the inclined surface abuts against the support plane, at this time the squeezed to-be-flattened member completely abuts against the circular end surface, completing the flattening operation of the to-be-flattened member. In this way, the production efficiency and yield of the produced battery cells can be improved. For the corresponding subsequent manufactured battery cells, the safety performance of the battery cells is improved.

### Description of Drawings

In order to more clearly illustrate the technical solutions of some embodiments of the present application, the drawings to be used in the description of some embodiments of the present application will be described briefly below. Obviously, the drawings in the following description are merely some embodiments of the present application. For those skilled in the art, other drawings can also be obtained according to the drawings without any creative effort.
Fig. 1 is a schematic structural diagram of a vehicle;
Fig. 2 is a schematic structural diagram of a battery;
Fig. 3 is a schematic structural diagram of a battery module in a battery;
Fig. 4 is a schematic exploded view of a battery cell;
Fig. 5 is a schematic structural diagram of a cylindrical electrode assembly for flattening operation by a guide and flattening mechanism provided in some embodiments of the present application;
Fig. 6 is a schematic structural diagram of a guide and flattening mechanism provided in some embodiments of the present application;
Fig. 7 is a schematic structural cross-sectional view of a guide and flattening mechanism provided in some embodiments of the present application;
Fig. 8 is a schematic structural diagram of the cooperation between a guide and flattening mechanism provided in some embodiments of the present application and a cylindrical electrode assembly;
Fig. 9 is a schematic structural diagram of a guide and flattening mechanism provided in some embodiments of the present application after flattening a to-be-flattened member of a cylindrical electrode assembly;
Fig. 10 is a schematic structural diagram of another guide and flattening mechanism provided in some embodiments of the present application after flattening a to-be-flattened member of a cylindrical electrode assembly;
Fig. 11 is a front view of a guide and flattening mechanism provided in some embodiments of the present application;
Fig. 12 is a front view of an elastic guide assembly in a guide and flattening mechanism provided in some embodiments of the present application;
Fig. 13 is a schematic structural diagram of an elastic guide assembly in a guide and flattening mechanism provided in some embodiments of the present application from another perspective;
Fig. 14 is a top view of Fig. 12;
Fig. 15 is a schematic structural diagram of a guide and flattening mechanism provided in some embodiments of the present application; and
Fig. 16 is a schematic structural cross-sectional view taken along A-A of Fig. 15.

In the accompanying drawings, the figures are not necessarily drawn to scale.

Description of reference signs:
1. vehicle; 1a. motor; 1b. controller;
10. battery; 11. first box portion; 12. second box portion;
20. battery module;
30. battery cell; 31. shell; 311. housing; 311a. opening; 312. end cover; 32. cylindrical electrode assembly; 321. tab; 322. to-be-flattened member; 32a. to-be-flattened end; 32b. circular end surface;
40. guide and flattening mechanism; 41. mounting seat; 41a. support plane; 411. end plate; 411a. accommodating groove; 412. enclosure portion; 412a. guide cavity; 412b. avoidance groove; 4121. guide portion; 4121a. tapered hole; 42. elastic guide assembly; 42a. inclined surface; 421. elastic piece; 421a. inclined unit surface; 421b. thinned area; 4211. first sub-section; 4211a. first end; 4211b. first inclined sub-surface; 4212. second sub-section; 4212a. second end; 4212b. second inclined sub-surface; 422. support shaft;
X. central axis.

### Detailed Description

In order to make the objects, technical solutions and advantages of some embodiments of the present application clearer, the technical solutions in some embodiments of the present application will be clearly described below with reference to the drawings for some embodiments of the present application. Apparently, the described embodiments are some of, rather than all of, the embodiments of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second" and the like in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, C and/or D may represent three situations: C exists alone, both C and D exist, and D exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in some embodiments of the present application shown in the drawings, as well as the overall thickness, length, width and other dimensions of an integrated device, are for illustrative purposes only, and should not constitute any limitation to the present application.

In the present application, the phrase "a plurality of" means two or more (including two).

In the present application, the battery cell may include a lithium-ion secondary battery cell, a lithium-ion primary battery cell, a lithium sulfur battery cell, a sodium lithium-ion battery cell, a sodium-ion battery cell, a magnesium-ion battery cell, or the like, which will not be limited in some embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can prevent liquid or other foreign matters from affecting charging or discharging of the battery cells.

The battery cell includes an electrode assembly and an electrolytic solution. The electrode assembly includes a positive electrode plate, a negative electrode plate, and a separator. The battery cell operates mainly relying on the movement of metal ions between the positive electrode plate and the negative electrode plate. The positive electrode plate includes a positive electrode current collector and a positive electrode active material layer. The positive electrode active material layer is coated on a surface of the positive electrode current collector. The positive electrode current collector includes a positive electrode current collection portion and a positive electrode protrusion protruding from the positive electrode current collection portion. The positive electrode current collection portion is coated with the positive electrode active material layer, and at least a part of the positive electrode protrusion is not coated with the positive electrode active material layer. The positive electrode protrusion is used as a positive tab. Taking a lithium-ion battery as an example, the positive current collector may be made of aluminum, and the positive electrode active material layer includes a positive electrode active material. The positive electrode active material may be lithium cobalt oxide, lithium iron phosphate, ternary lithium or lithium manganate, etc. The negative electrode plate includes a negative electrode current collector and a negative electrode active material layer. The negative electrode active material layer is coated on a surface of the negative electrode current collector. The negative electrode current collector includes a negative electrode current collection portion and a negative electrode protrusion protruding from the negative electrode current collection portion. The negative electrode current collection portion is coated with the negative electrode active material layer, and at least a part of the negative electrode protrusion is not coated with the negative electrode active material layer. The negative electrode protrusion is used as a negative tab. The negative electrode current collector may be made of copper, and the negative electrode active material layer include a negative electrode active material. The negative electrode active material may be carbon, silicon, etc. In order to ensure that no fusing occurs when a large current passes, there are a plurality of positive tabs which are stacked together, and there are a plurality of negative tabs which are stacked together. The separator may be of polypropylene (PP), polyethylene (PE), etc.

After discovering the problem of low yield of produced cylindrical battery cells, the researchers have conducted systematic analysis and research on the structure and production process of cylindrical battery cells. It was found that in a cylindrical battery cell, an annular tape is usually attached to a peripheral surface of an end, from which a tab protrudes, of a cylindrical electrode assembly, to reduce the risk of short circuit between the tab and a housing. However, during the attachment of the annular tape, the annular tape will partially extend out of an edge of an end of the cylindrical electrode assembly that is provided with the tab, as shown in Fig. 5 for details. In this way, after mounting the cylindrical electrode assembly into the housing and performing a welding process between the housing and an end cover, there is a certain risk that the part of the annular tape that protrudes from the circular end surface with the tab is burned, so that the yield of the cylindrical battery cells produced is seriously affected, and the improvement of the safety performance of the battery cells is not facilitated.

Based on the above problems discovered by the researchers, the above problems can be better alleviated by bending, flattening and adhering the part of the annular tape that protrudes from an edge of the end of the cylindrical electrode assembly that is provided with the tab to the circular end surface at this end. However, manual bending and flattening of the annular tape is inefficient and difficult to ensure the yield. Further, the researchers have proposed a guide and flattening mechanism that can be used to bend and flatten an annular tape on a cylindrical electrode assembly, in order to replace the operating mode of manual bending and flattening of the annular tape and improve the operating efficiency and yield of the bending and flattening. The technical solutions described in some embodiments of the present application are applicable to guide and flattening mechanisms and guide and flattening devices using the guide and flattening mechanisms.

The guide and flattening mechanism provided according to some embodiments of the present application is configured to a to-be-flattened member on a to-be-flattened end of a cylindrical electrode assembly, such that the to-be-flattened member is bent and abuts against a circular end surface of the to-be-flattened end. The to-be-flattened member is a part, which protrudes from the circular end surface of the cylindrical electrode assembly in an axial direction of the cylindrical electrode assembly, of an annular tape attached to a peripheral wall of the cylindrical electrode assembly, or a tab on the to-be-flattened end that protrudes in the axial direction of the cylindrical electrode assembly. The guide and flattening mechanism includes a mounting seat and an elastic guide assembly. The mounting seat has a support plane. The elastic guide assembly is arranged at the mounting seat and has an inclined surface. The inclined surface is arranged around a central axis perpendicular to the support plane and is located on a side of the elastic guide assembly facing away from the support plane. From a side of the inclined surface close to the central axis to a side of the inclined surface away from the central axis, at least a part of the inclined surface is arranged obliquely in a direction away from the support plane. The inclined surface is configured to be elastically deformed in a direction approaching the support plane when the inclined surface is squeezed in the direction approaching the support plane, so as to guide the bending of the to-be-flattened member and flatten the to-be-flattened member on the circular end surface with the cooperation of the support plane.

In the guide and flattening mechanism provided in some embodiments of the present application, the elastic guide assembly has an inclined surface, which is elastically deformed in a direction approaching the support plane when being squeezed in the direction approaching the support plane. After the annular tape is attached to the peripheral wall of the cylindrical electrode assembly, in order to keep the axis of the cylindrical electrode assembly coaxial with the central axis of the inclined surface, the end of the cylindrical electrode assembly to which the annular tape is attached is brought closer to the guide and flattening mechanism. The part of the annular tape that protrudes from the circular end surface of the cylindrical electrode assembly may be squeezed against the inclined surface, and then gradually bent under the guidance of the inclined surface, and the part of the annular tape that protrudes from the circular end surface is squeezed with the cooperation of the support plane, to abut the part against the circular end surface of the cylindrical electrode assembly. That is, the part of the annular tape that protrudes from the circular end surface is flattened on the circular end surface. In this way, a space occupied by the annular tape in the axial direction of the cylindrical electrode assembly inside a battery cell can be reduced, and thus the risk of burning the annular tape can be reduced during welding of an end cover to a housing, thereby facilitating the improvement of the safety performance of the battery cell while improving the product yield of battery cells. Moreover, by replacing the operating mode of manual bending and flattening of the annular tape with the guide and flattening mechanism, the operating efficiency and yield of bending and flattening of the annular tape attached to the cylindrical electrode assembly can be improved.

The battery cell may be the smallest power supply unit of the battery, and the battery may be used as a power supply unit of an electrical device.

The electrical device may be, but not limited to, a vehicle, a mobile phone, a portable apparatus, a laptop, a ship, a spacecraft, an electric toy, an electric tool, and so on. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in some embodiments of the present application.

The guide and flattening mechanism provided in some embodiments of the present application is configured to perform bending and flattening operations on the annular tape attached to the cylindrical electrode assembly. The cylindrical electrode assembly may be applicable to a battery cell, the battery cell may be applicable to a battery, and the battery may be applicable to an electrical device. For convenience of description, the electrical device being a vehicle is taken as an example for description.

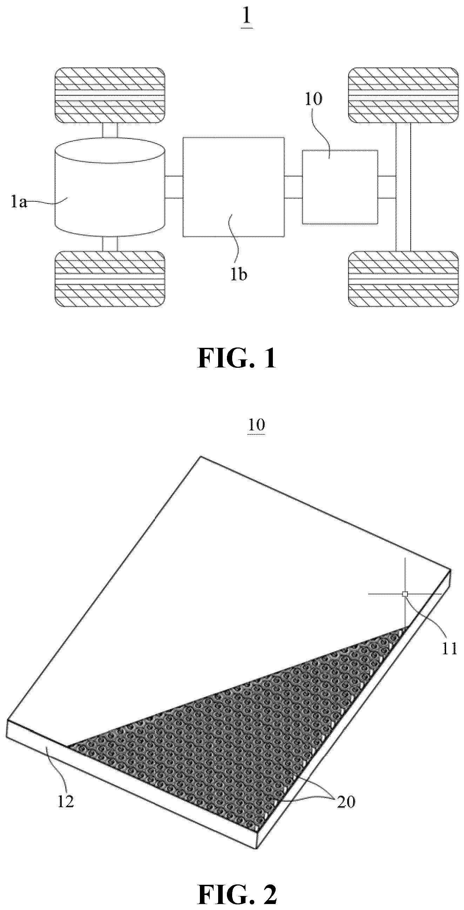

As shown in Fig. 1, a battery 10 is provided inside a vehicle 1. The battery 10 may be arranged at the bottom or the head or the tail of the vehicle 1. The battery 10 may be configured to supply power to the vehicle 1. For example, the battery 10 may be used as an operation power supply of the vehicle 1.

The vehicle 1 may further include a controller 1b and a motor 1a. The controller 1b is configured to control the battery 10 to supply power to the motor 1a, for example, for meeting the operating power demand when the vehicle 1 is starting, navigating and driving.

In some embodiments of the present application, the battery 10 not only may serve as an operating power source of the vehicle 1, but also may serve as a driving power source of the vehicle 1, thus replacing or partially replacing fuel or natural gas to provide driving power for the vehicle 1.

As shown in Fig. 2, the battery 10 includes a battery cell (not shown in Fig. 2). The battery 10 may further include a box for accommodating the battery cell.

The box is configured to accommodate the battery cell, and the box may be of various structural forms. In some embodiments, the box may include a first box portion 11 and a second box portion 12. The first box portion 11 and the second box portion 12 are covered by each other. The first box portion 11 and the second box portion 12 jointly define an accommodating space for accommodating the battery cell. The second box portion 12 may be a hollow structure with one end open, and the first box portion 11 may be a plate-like structure. The first box portion 11 covers the open side of the second box portion 12 to form a box having an accommodating space. The first box portion 11 and the second box portion 12 may alternatively both be hollow structures with one side open. The open side of the first box portion 11 covers the open side of the second box portion 12 to form a box having an accommodating space. Of course, the first box portion 11 and the second box portion12 may be of various shapes, such as a cylinder or a cuboid.

In order to improve the sealing performance after the first box portion 11 and the second box portion 12 are connected to each other, a sealing member, such as a sealant and a sealing ring, may be further provided between the first box portion 11 and the second box portion 12.

Assuming that the first box portion 11 covers the second box portion 12, the first box portion 11 can also be called an upper box cover, and the second box portion 12 can also be called a lower box body.

There may be one or more battery cells in the battery 10. If a plurality of battery cells are provided, the plurality of battery cells may be connected in series, in parallel or in series-parallel. The series-parallel connection means that some of the plurality of battery cells are connected in series and some are connected in parallel. The plurality of battery cells may be directly connected together in series or in parallel or in series-parallel, and then an entirety composed of the plurality of battery cells may be accommodated in the box. Alternatively, a plurality of battery cells are first connected in series, in parallel or in series-parallel to form a battery module 20. A plurality of battery modules 20 are then connected in series or in parallel or in series-parallel to form an entirety, and are accommodated in the box.

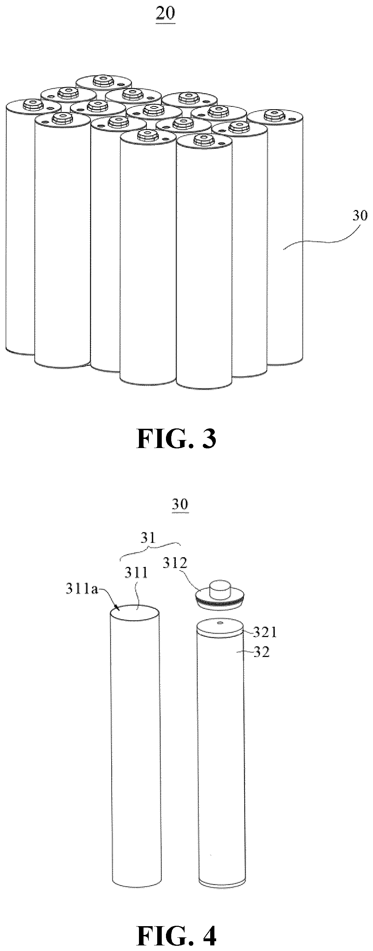

In some embodiments, as shown in Fig. 3, Fig. 3 is a schematic structural diagram of the battery module 20 shown in Fig. 2. There are a plurality of battery cells 30 in the battery module 20. The plurality of battery cells 30 are first connected in series or in parallel or series-parallel to form a battery module 20. A plurality of battery modules 20 are then connected in series or in parallel or in series-parallel to form an entirety, and are accommodated in the box.

In some embodiments, the plurality of battery cells 30 in the battery module 20 may be electrically connected to each other via a bus component, so as to realize parallel connection, series connection or series-parallel connection of the plurality of battery cells 30 in the battery module 20.

Referring to Fig. 4, Fig. 4 is a schematic exploded view of the battery cell 30 shown in Fig. 3. The battery cell 30 provided in some embodiments of the present application includes a cylindrical electrode assembly 32 and a shell 31. The shell 31 has an accommodating cavity, and the cylindrical electrode assembly 32 is accommodated in the accommodating cavity.

In some embodiments, the shell 31 may include a housing 311 and an end cover 312. The housing 311 is a hollow structure with one side open. The end cover 312 covers an opening 311a of the housing 311 and forms a sealing connection, so as to form a sealed space for accommodating the cylindrical electrode assembly 32 and an electrolyte.

When assembling the battery cell 30, it is possible to first place the cylindrical electrode assembly 32 into the housing 311, then cover the opening of the housing 311 by the end cover 312, and then inject the electrolyte into the housing 311 through an electrolyte injection port on the end cover 312.

In some embodiments, the shell 31 may be further configured to accommodate the electrolyte, such as an electrolytic solution. The shell 31 may be of various structural forms.

The housing 311 may be made of various materials, such as copper, iron, aluminum, stainless steel, aluminum alloy, and plastic, which will not be particularly limited in some embodiments of the present application.

One or more cylindrical electrode assemblies 32 may be accommodated in the housing 311. In Fig. 4, one cylindrical electrode assembly 32 is accommodated in the housing 311.

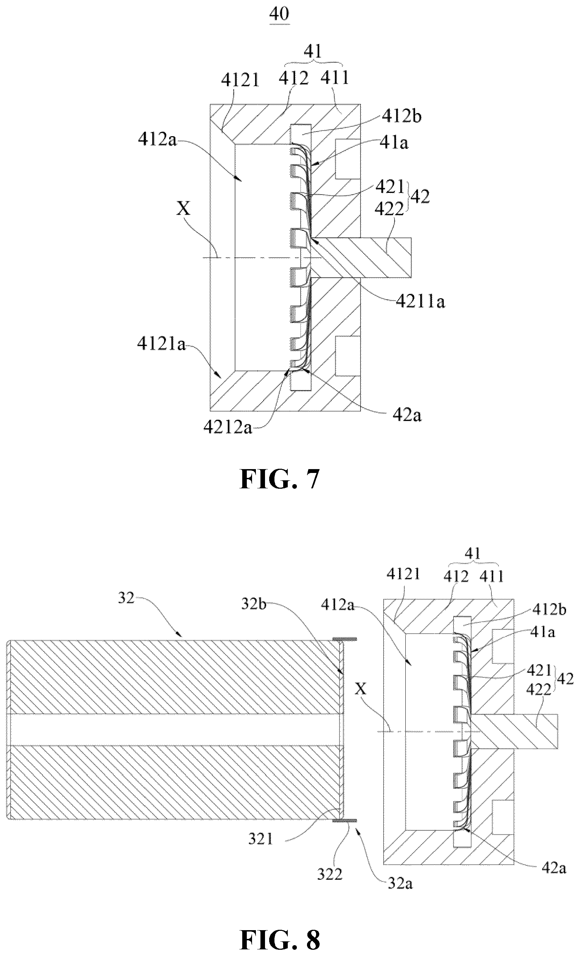

Fig. 5 shows a schematic structural diagram of a cylindrical electrode assembly 32 for flattening operation in the present application; Figs. 6 and 7 respectively show a schematic structural diagram and a schematic structural cross-sectional view of a guide and flattening mechanism 40 provided in some embodiments of the present application; and Fig. 8 shows a schematic structural diagram of a guide and flattening mechanism 40 provided in some embodiments of the present application when flattening a to-be-flattened end 32a of a cylindrical electrode assembly 32.

As shown in Figs. 5 to 8, the guide and flattening mechanism 40 provided according to some embodiments of the present application is configured to flatten a to-be-flattened member 322 on a to-be-flattened end 32a of a cylindrical electrode assembly 32, such that the to-be-flattened member 322 is bent and abuts against a circular end surface 32b of the to-be-flattened end 32a. The to-be-flattened member 322 is a part, which protrudes from the circular end surface 32b, of an annular tape attached to a peripheral wall of the cylindrical electrode assembly 32. The guide and flattening mechanism 40 includes a mounting seat 41 and an elastic guide assembly 42. The mounting seat 41 has a support plane 41a. The elastic guide assembly 42 is arranged at the mounting seat 41 and has an inclined surface 42a. The inclined surface 42a is arranged around a central axis X perpendicular to the support plane 41a and is located on a side of the elastic guide assembly 42 facing away from the support plane 41a. From a side of the inclined surface 42a close to the central axis X to a side of the inclined surface 42a away from the central axis X, at least a part of the inclined surface 42a is arranged obliquely in a direction away from the support plane 41a. The inclined surface 42a is configured to be elastically deformed in a direction approaching the support plane 41a when being subjected to a squeezing force in the direction approaching the support plane 41a, so as to guide the bending of the to-be-flattened member 322 and flatten the to-be-flattened member 322 on the circular end surface 32b with the cooperation of the support plane 41a.

In some embodiments, the guide and flattening mechanism 40 may be configured to bend and flatten the part of the annular tape that protrudes from the circular end surface 32b of the cylindrical electrode assembly 32, or may be configured to flatten a tab 321 during the manufacturing of the cylindrical electrode assembly 32, so as to make the tab 321 denser and the end surface flattener.

Specifically, the annular tape is attached to a peripheral surface of the tab 321 of the cylindrical electrode assembly 32 to improve the insulation performance between the tab 321 and the housing.

After the cylindrical electrode assembly 32 is rolled and formed, the tab 321 includes multiple turns of tab layers. The tab layers extend a longer distance and are arranged spaced apart from each other. The tab layers can be bent and flattened by the flattening of the guide and flattening mechanism, and the tab layers squeeze each other to become denser. The bending and flattening of the part of the annular tape that protrudes from the circular end surface 32b of the cylindrical electrode assembly 32 are mainly described in the present application.

The specific form of the mounting seat 41 of the guide and flattening mechanism 40 is not limited, which may be flat plate-shaped, block-shaped, cylindrical or other irregular shapes, as long as it has a support plane 41a.

In some embodiments, the support plane 41a may be one continuous plane, or there may be a plurality of support planes, with structures such as grooves or protrusions being provided between a plurality of support planes 41a. Reference may be made to Fig. 6 for details.

The structural type of the elastic guide assembly 42 is not limited, and may include an elastic material, or the elastic guide assembly 42 may be configured to have a thin-walled structure to achieve elastic deformation.

Illustratively, the elastic guide assembly 42 may be configured to include a sponge body, and the inclined surface 42a is provided on the sponge body. Pressure is exerted on the sponge body, such that the sponge body is elastically deformed and approaches the support plane 41a. Finally, the sponge body can abut against the support plane 41a, and the inclined surface 42a is in a state substantially parallel to the support plane 41a. At this time, the to-be-flattened member 322 is completely flattened on the circular end surface 32b of the cylindrical electrode assembly 32. It can be understood that in this embodiment, the inclined surface 42a may be continuously arranged around the central axis X.

In some embodiments, the inclined surface 42a may be a continuous surface capable of generating elastic deformation, or the inclined surface 42a may include a plurality of inclined sub-surfaces arranged obliquely. The plurality of inclined sub-surfaces surround the peripheral side of the central axis X, are arranged obliquely relative to the support plane 41a, and then cooperate with each other to form then inclined surface 42a.

In some embodiments, the inclined surface 42a may be an arc-shaped surface arranged obliquely. In an embodiment in which the inclined surface 42a includes a plurality of inclined sub-surfaces, the plurality of inclined sub-surfaces may also be planes arranged obliquely. That is, the generatrix of the inclined surface 42a may be configured as a straight line or a curve. It should be noted that the generatrix of the inclined surface 42a may be a curve or a straight line that rotates about the central axis X to form the inclined surface.

From the side of the inclined surface 42a close to the central axis X to the side away from the central axis X, the entire inclined surface 42a may be arranged obliquely in a direction away from the support plane 41a, or only a part of the inclined surface 42a may be arranged obliquely in a direction away from the support plane 41a, as long as it can be ensured that the inclined surface 42a can function to bend and flatten the to-be-flattened member 322.

When subjected to a squeezing force in a direction approaching the support plane 41a, the inclined surface 42a is elastically deformed in the direction approaching the support plane 41a until the part of the inclined surface 42a facing the support plane 41a approaches the support plane 41a, and finally is substantially parallel to the support plane 41a. During the bending and flattening of the to-be-flattened member 322, at least a part of the inclined surface 42a can generate a squeezing force on the to-be-flattened member 322, thereby causing the to-be-flattened member 322 to be bent in a direction approaching the circular end surface 32b and finally attached to the circular end surface 32b.

In some embodiments, after being elastically deformed, at least a part of the inclined surface 42a becomes a plane that is substantially parallel to the support plane 41a. The plane part may be a circular plane, or may be an annular plane.

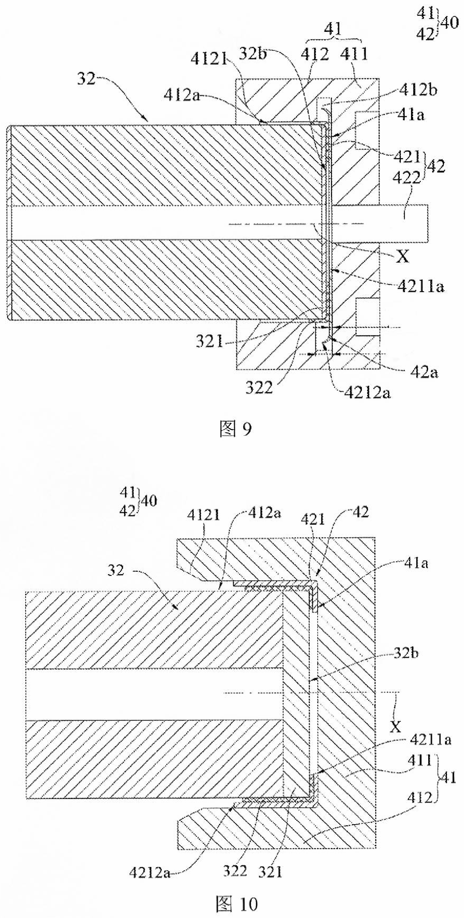

The flattening process will be described below by taking the guide and flattening mechanism 40 for flattening the part of the annular tape that protrudes from the circular end surface 32b as an example. Figs. 9 and 10 respectively show schematic structural diagrams of a guide and flattening mechanism 40 provided in different embodiments of the present application when the flattening operation is completed on a to-be-flattened end 32a of a cylindrical electrode assembly 32. In the figures, the to-be-flattened member 322 is an annular tape.

As shown in Fig. 8, in the initial state, the annular tape at the to-be-flattened end 32a of the cylindrical electrode assembly 32 protrudes from the circular end surface 32b and extends in the axial direction of the cylindrical electrode assembly 32, the to-be-flattened end 32a of the cylindrical electrode assembly 32 gradually approaches the inclined surface 42a, and the inclined surface 42a has a guiding effect on the part of the annular tape that protrudes from the circular end surface 32b, so that the part of the annular tape that protrudes from the circular end surface 32b is bent in the direction of the central axis X. Moreover, as the squeezing force between the cylindrical electrode assembly 32and the inclined surface 42a increases, the amount of deformation of the inclined surface 42a toward the support plane 41a gradually increases, and the bending degree of the part of the annular tape that protrudes from the circular end surface 32b gradually increases, until the part of the inclined surface 42a that corresponds to the support plane 41a abuts against the support plane 41a, as shown in Fig. 9 for details. At this time, the part of the annular tape that protrudes from the circular end surface 32b, that is, the to-be-flattened member 322, completely abuts against the circular end surface 32b of the cylindrical electrode assembly 32, completing the bending and flattening operations of the to-be-flattened end 32a of the cylindrical electrode assembly 32.

It can be understood that since the deformation of the inclined surface 42a is elastic deformation, after completing the bending and flattening operations of the to-be-flattened member 322 on the to-be-flattened end 32a of the cylindrical electrode assembly 32, the pressure exerted by the cylindrical electrode assembly 32 on the inclined surface 42a is canceled, and the elastic guide assembly 42 rebounds under the action of its own elastic potential energy, the inclined surface 42a returns to the initial state, and the flattening operation can be performed on the next cylindrical electrode assembly 32.

Therefore, in the guide and flattening mechanism 40 provided in some embodiments of the present application, the elastic guide assembly 42 is configured to have an inclined surface 42a, and the inclined surface 42a is configured to be elastically deformed in a direction approaching the support plane 41a when being squeezed in the direction approaching the support plane 41a. During the squeezing, bending and flattening of the to-be-flattened end 32a of the cylindrical electrode assembly 32 by the guide and flattening mechanism 40, the inclined surface 42a can provide guidance for the to-be-flattened member 322, such that the to-be-flattened member 322 is bent in a direction gradually approaching the circular end surface 32b of the cylindrical electrode assembly 32, until the part of the inclined surface 42a that corresponds to the support plane 41a abuts against the support plane 41a. After completing the bending deformation by means of the inclined surface 42a, the to-be-flattened member 322 is finally bent, flattened and abuts against the circular end surface 32b with the squeezing force provided by cooperation between the inclined surface 42a and the support plane 41a. In this way, where the to-be-flattened member 322 is the part of the annular tape that protrudes from the circular end surface 32b, the use of the guide and flattening mechanism 40 to bend and flatten the annular tape can reduce the axial space occupied by the annular tape inside the battery cell, replace manual bending and flattening, and facilitate the improvement of the yield and efficiency of bending and flattening. Moreover, in the cylindrical electrode assembly 32 with the bent and flattened the annular tape, the space occupied by the annular tape is small, facilitating the improvement of the energy density of the battery cell and reducing the risk of burning the annular tape during welding of an end cover to a housing, thereby facilitating the improvement of the safety performance of the battery cell while improving the yield of battery cells. In some other cases, for example, where the to-be-flattened member 322 is the tab 321 of the cylindrical electrode assembly 32, it is also possible to bend and compact tabs 321 with a shape similar to the annular tape or other types of tabs 321, in order to facilitate the smooth progress of the subsequent welding process of the tab 321. By way of example, the tab 321 of the cylindrical electrode assembly 32 may have the same annular shape as the annular tape.

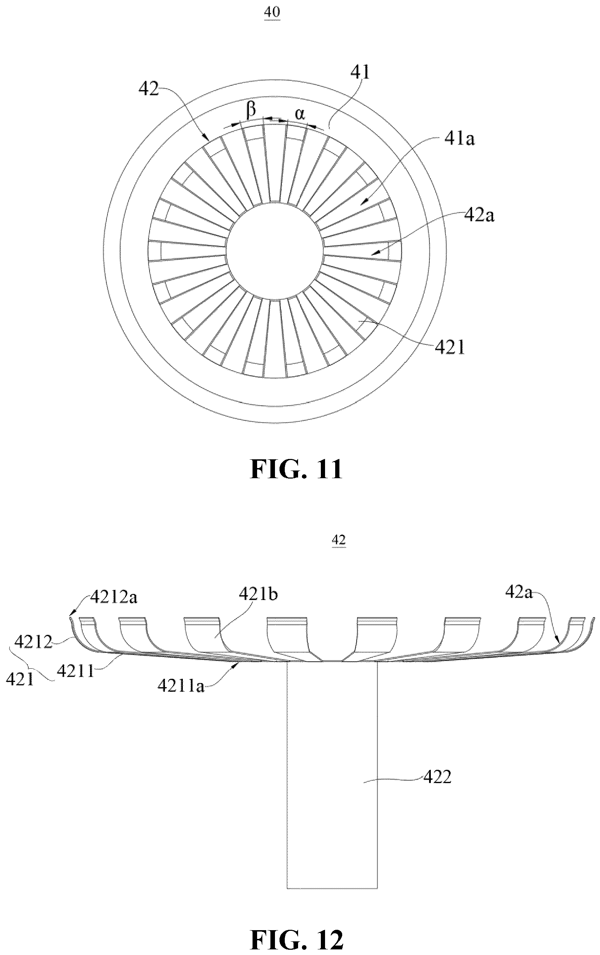

Fig. 11 is a schematic diagram of an elastic guide assembly 42 assembled on a mounting seat 41 provided in some embodiments of the present application. Figs. 12 to 14 are schematic structural diagrams of an elastic guide assembly 42 provided in some embodiments of the present application from different perspectives.

As shown in Figs. 11 to 14, in some embodiments, in order to obtain the inclined surface 42a, the elastic guide assembly 42 includes a plurality of elastic pieces 421. The plurality of elastic pieces 421 are arranged around the central axis X perpendicular to the support plane 41a. The elastic pieces 421 are each arranged obliquely in a direction away from the support plane 41a from a first end 4211a of elastic piece 421 close to the central axis X to a second end 4212a away from the central axis X. A surface of each elastic piece 421 facing away from the support plane 41a is formed with an inclined unit surface 421a, and the inclined unit surfaces 421a cooperate with each other to define the inclined surface 42a.

In some embodiments, the elastic piece 421 may have a plane structure or may be partially curled. In the circumferential direction around the central axis X, the plurality of elastic pieces 421 may be arranged at a preset angle, so that the plurality of inclined unit surfaces 421a are arranged spaced apart from each other. Alternatively, the plurality of elastic pieces 421 are adjoined to each other, that is, the plurality of inclined unit surfaces 421a are adjoined to each other, to jointly define a continuous inclined surface 42a.

In some embodiments, in a natural state, that is, when the elastic pieces 421 are not subjected to pressure, the included angles between the plurality of elastic pieces 421 and the support plane 41a may be the same or different. For example, the included angles between the tangents corresponding to the parts of the plurality of elastic pieces 421 at the same distance from the support plane 41a and the support plane 41a may be set to be the same, or the radii of curvature of the curved surfaces corresponding to the parts of the plurality of elastic pieces 421 at the same distance from the support plane 41a may be set to be the same.

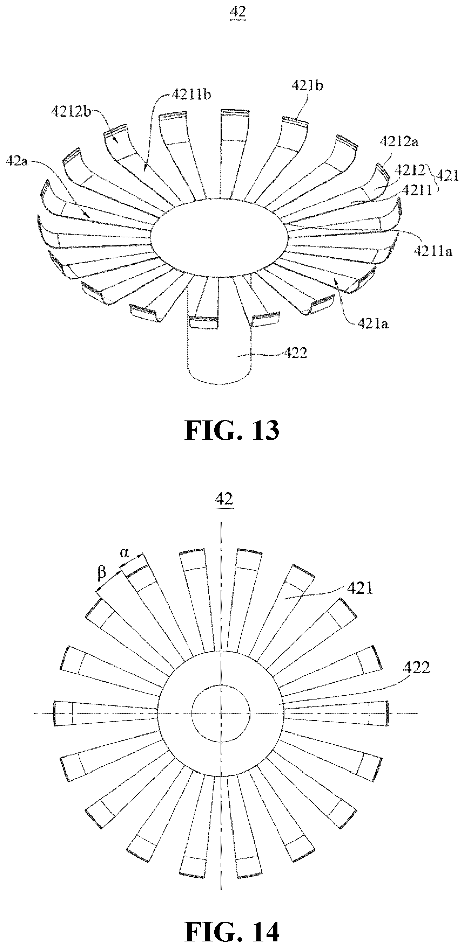

In some embodiments, referring to Figs. 8, 15 and 16, when performing bending and flattening operations, after the plurality of elastic pieces 421 are squeezed, the part of each elastic piece 421 corresponding to the support plane 41a finally abuts against the support plane 41a. At this time, the main body part of the inclined unit surface 421a of the elastic piece 421 is substantially perpendicular to the central axis X. In some embodiments of the present application, as shown in Figs. 8 and 13, in the circumferential direction around the central axis X, two adjacent elastic pieces 421 may be configured to be adjoined to each other, that is, the spacing between the two adjacent elastic pieces 421 is zero. Alternatively, in some other embodiments, in the circumferential direction around the central axis X, two adjacent elastic pieces 421 may be arranged spaced apart from each other, that is, there is a certain gap between the two adjacent elastic pieces 421.

In some embodiments, the elastic piece 421 may be made of steel, plastic, PP, PET or other materials, and may have a certain elasticity as long as the thickness of the elastic piece 421 is appropriate.

It can be understood that in some embodiments, when the elastic piece 421 is subjected to pressure in the direction of the support plane 41a, at least one of the first end 4211a and the second end 4212a of the elastic piece 421 is a free end in the direction along the central axis X, and moves relative to the other end until at least a part of the elastic piece 421 forms a plane perpendicular to the central axis X.

To this end, referring to Figs. 11 to 14, in some embodiments, it is possible to configure the first end 4211a of the elastic piece 421 as a fixed end, and the second end 4212a as a free end. When the elastic piece 421 is subjected to pressure, the second end 4212a can move toward the support plane 41a, as shown in Fig. 9.

In some other embodiments, referring to Fig. 10, it is possible to configure the first end 4211a of the elastic piece 421 as a free end, and the second end 4212a as a fixed end. When the elastic piece 421 is subjected to pressure, the first end 4211a can move along the support plane 41a in a direction away from each other.

It can be understood that in an embodiment in which the first end 4211a is a fixed end, the first ends 4211a of the plurality of elastic pieces 421 may be connected to each other or separate from each other, and then assembled to the support plane 41a of the mounting seat 41. In an embodiment in which the first end 4211a is a free end, the first ends 4211a of the plurality of elastic pieces 421 may be movably connected to each other, and the degree of freedom of each first end 4211a in the movement direction is reserved to provide guidance for the movement of the first end 4211a.

Similarly, in an embodiment in which the second end 4212a is a free end, the second ends 4212a of the plurality of elastic pieces 421 can be connected to each other or separate from each other. In an embodiment in which the second end 4212a is a fixed end, the second ends 4212a of the plurality of elastic pieces 421 may also be fixedly connected to each other or separate from each other.

It can be understood that the elastic guide assembly 42 is configured to include a plurality of elastic pieces 421, so that the simplification of the overall structure of the elastic guide assembly 42 is facilitated while achieving the flattening effect on the to-be-flattened end 32a of the cylindrical electrode assembly 32.

In some embodiments, the elastic pieces 421 may be arranged in any suitable form, as long as the inclined surface 42a can at least partially abut against the to-be-flattened member 322 when being subjected to pressure, so as to bend the to-be-flattened member 322 and realize the bending and flattening of the to-be-flattened member 322 with the cooperation of the support plane 41a.

In some embodiments, referring to Figs. 7 and 11 to 15, the plurality of elastic pieces 421 are arranged on the support plane 41a in a circular array around the central axis X perpendicular to the support plane 41a.

Specifically, the plurality of elastic pieces 421 are arranged evenly spaced apart from each other in the circumferential direction around the central axis X, such that during a process of the to-be-flattened end 32a of the cylindrical electrode assembly 32 squeezing the inclined surface 42a, in the circumferential direction of the to-be-flattened member 322, at regular intervals, there is an inclined unit surface 421a that provides guidance for the bending of the to-be-flattened member 322, and the to-be-flattened member 322 is subjected to a relatively uniform bending force in its circumferential direction, thereby facilitating the smooth progress of the bending process of the to-be-flattened member 322.

In some embodiments, the elastic pieces 421 are in the shape of a sector or an annular sector arranged in a circular array around the central axis X.

Since the to-be-flattened member 322 can be in an annular shape after being flattened on the circular end surface 32b, the elastic pieces 421 are configured in the shape of a sector or an annular sector arranged in a circular array around the central axis X, such that when at least a part of each elastic piece 421 abuts against the support plane 41a, it is convenient for the elastic piece 421 and the support plane 41a to further cooperate with each other to jointly define a plane for squeezing the to-be-flattened member 322, so as to flatten the to-be-flattened member 322 on the circular end surface 32b.

In some embodiments, after the elastic pieces 421 are each subjected to pressure, in a state where at least a part of the elastic piece 421 abuts against the support plane 41a, in the circumferential direction of the central axis X, adjacent elastic pieces 421 may be adjoined to each other, or may be arranged spaced apart from each other, in both cases the flattening operation of the to-be-flattened member 322 can be realized. Fig. 14 shows a schematic structural diagram of an embodiment in which the plurality of elastic pieces 421 are arranged spaced apart from each other.

In some optional embodiments, the number of elastic pieces 421 is n, and a central angle corresponding to each elastic piece 421 is α, where nα = 360°, and n is a positive integer greater than 1.

Where two adjacent elastic pieces 421 are adjoined to each other, when at least a part of the elastic pieces 421 abuts against the support plane 41a, the parts of the plurality of elastic pieces 421 that are planes substantially parallel to the support plane 41a enclose a complete ring or circle, so that the elastic pieces 421 and the abutment surface of the bent to-be-flattened member 322 form a continuous surface as a whole, facilitating the improvement of the surface flatness of the to-be-flattened member 322 after being flattened.

Where two adjacent elastic pieces 421 are arranged spaced apart from each other, when at least a part of the elastic pieces 421 abuts against the support plane 41a, the parts of the plurality of elastic pieces 421 that are planes substantially parallel to the support plane 41a can cooperate with the support plane 41a to jointly enclose a complete ring or circle, so that the elastic pieces 421 and the support plane 41a cooperate with each other to form a continuous surface with the abutment surface of the bent to-be-flattened member 322 as a whole, facilitating the improvement of the surface flatness of the to-be-flattened member 322.

In some embodiments, the elastic piece 421 includes a first sub-section 4211 and a second sub-section 4212 connected to each other. The first sub-section 4211 has the first end 4211a away from the second sub-section 4212, the first sub-section 4211 is arranged obliquely in a direction away from the support plane 41a from the first end 4211a to an end of the first sub-section 4211 connected to the second sub-section 4212, and a first inclined sub-surface 4211b is formed on the first sub-section 4211. The second sub-section 4212 has the second end 4212a away from the first sub-section 4211, the second sub-section 4212 is bent relative to the first sub-section 4211 and extends a preset distance in a direction away from the support plane 41a, and a second inclined sub-surface 4212b is formed on the second sub-section 4212. The second inclined sub-surface 4212b is connected to the first inclined sub-surface 4211b in a smooth-transition manner to form the inclined unit surface 421a. The smooth-transition connection facilitates the guidance of the bending and flattening of the annular tape in a direction approaching the circular end surface 32b.

It can be understood that, if the first sub-section 4211 extends in a direction facing away from the support plane 41a, the first sub-section 4211 may extend in a direction perpendicular to the support plane 41a, or be inclined at a certain angle relative to a direction perpendicular to the support plane 41a. The specific angle can be adjusted and selected according to the guidance effect, and will not be described in details.

The elastic piece 421 is configured to include a first sub-section 4211 and a second sub-section 4212, and the second sub-section 4212 is configured to be bent relative to the first sub-section 4211 and extend in the direction facing away from the support plane 41a, so that during the movement of the cylindrical electrode assembly 32 toward the support plane 41a, the to-be-flattened end 32a of the cylindrical electrode assembly first passes through the first sub-section 4211. Since the first sub-section 4211 is substantially perpendicular to the support plane 41a, the first sub-section 4211 can provide a certain guidance for the movement of the to-be-flattened member 322 toward the support plane 41a, and correct the running direction of the cylindrical electrode assembly 32. Since the first sub-section 4211 and the second sub-section 4212 are in a smooth transition, when the to-be-flattened member 322 passes through the smooth-transition area between the first sub-section 4211 and the second sub-section 4212, the smooth-transition area can provide guidance for the movement of the to-be-flattened member 322, so that the to-be-flattened member 322 is gradually bent in the direction approaching the circular end surface 32b more smoothly.

As shown in Fig. 10, in some optional embodiments, the first end 4211a is a fixed end, the second end 4212a is a free end, and the elastic piece 421 is configured to move the second end 4212a toward the support plane 41a when being squeezed in a direction approaching the support plane 41a.

It can be understood that the first end 4211a is a fixed end, and the second end 4212a is a free end, so that when the elastic piece 421 is elastically deformed under pressure, the first end 4211a is fixed relative to the support plane 41a, and the second end 4212a can move in the direction of the support plane 41a to realize that at least a part of the elastic piece 421 is parallel to the support plane 41a.

In some embodiments, the first end 4211a may be fixedly connected to the support plane 41a, or may be connected to other components of the elastic guide assembly 42, and then connected to the mounting seat 41 via the other components to achieve the fixation of the first end 4211a.

With this arrangement, when the elastic piece 421 is squeezed in the direction of the support plane 41a, the first end 4211a is fixed and the second end 4212a moves, so that while realizing the guide and flattening effect of the elastic pieces 421 on the to-be-flattened member 322, the simplification of the movement of the elastic pieces 421 is facilitated, and the movement of the elastic pieces 421 is more stable, thereby improving the stability and flattening effect of the guiding movement of the to-be-flattened member 322.

In some embodiments, referring to Figs. 7, and 11 to 14, the elastic guide assembly 42 further includes a support shaft 422. The support shaft 422 is connected to the mounting seat 41, and the first ends 4211a of the plurality of elastic pieces 421 are connected to a peripheral surface of the support shaft 422 and are arranged evenly spaced apart from each other in a circumferential direction of the support shaft 422.

It can be understood that the first ends 4211a of the plurality of elastic pieces 421 are connected to the support shaft 422, so that the support shaft 422 can provide a certain support for the elastic pieces 421 during the deformation of the elastic pieces 421. In addition, the first ends 4211a are connected to the support shaft 422, so as to position the first ends 4211a by means of the support shaft 422. Therefore, the first ends 4211a of the plurality of elastic pieces 421 are configured to be connected to the support shaft 422, so that the overall structure of the elastic guide assembly 42 can be simplified and the fixation of the first ends 4211a can be realized.

The plurality of elastic pieces 421 are arranged evenly spaced apart from each other in the circumferential direction of the support shaft 422, so that when the elastic pieces 421 provide guidance for the to-be-flattened member 322, the acting forces of the elastic piece 421 on the to-be-flattened member 322 are relatively evenly distributed. In this way, during the guiding and flattening of the to-be-flattened end 32a of the cylindrical electrode assembly 32, the forces on the cylindrical electrode assembly 32 are distributed more evenly, facilitating the improvement of the stability of the cylindrical electrode assembly 32 running toward the support plane 41a.

As shown in Fig. 10, in some other embodiments, the first end 4211a is a free end, the second end 4212a is a fixed end, and the elastic piece 421 is configured to move the first end 4211a in a direction away from the central axis X when being squeezed in a direction approaching the support plane 41a.

As shown in Fig. 10, the first end 4211a is a free end and the second end 4212a is a fixed end, so that when the elastic piece 421 is squeezed in a direction approaching the support plane 41a, the first end 4211a can move, but the second end 4212a cannot move.

As shown in Fig. 10, the second end 4212a is a fixed end, so that the second end 4212a may be connected to the mounting seat 41. The first end 4211a is a free end, so that when the elastic piece 421 is subjected to pressure, the first end 4211a bears against the support plane 41a and can move along the support plane 41a.

It can be understood that, as shown in Fig. 10, when the bending of the to-be-flattened member 322 is completed, the amount of deformation of the elastic piece 421 reaches the maximum. At this time, the to-be-flattened member 322 may bear against the support plane 41a, or the to-be-flattened member 322 may abut against the plane part of the elastic piece 421 that abuts against the support plane 41a, so as to achieve flattening.

Therefore, with such an arrangement, while achieving the flattening operation of the to-be-flattened member 322 of the cylindrical electrode assembly 32, the overall structure of the elastic guide assembly 42 can be simplified; and with one end of the elastic piece 421 fixed and the other end thereof movable, during the running of the elastic piece 421, the improvement of the stability of the elastic deformation of the elastic piece 421 is also facilitated, thereby improving the stability of the bending and flattening operations of the to-be-flattened member 322.

In some embodiments, among the plurality of elastic pieces 421 arranged in a circular array, an included angle β between two adjacent elastic pieces 421 satisfies: β ≤ 30°. Illustratively, β may be 30°, 25°, 20°, 15°, etc.

The included angle between two adjacent elastic pieces 421 may be an included angle between two adjacent side edges of the two adjacent elastic pieces 421. It can be understood that when the elastic piece 421 first comes into contact with the to-be-flattened member 322, in the circumferential direction of the to-be-flattened member 322, the central angle corresponding to the part of the to-be-flattened member 322 that is not in contact with the elastic piece 421 is defined as β, where β is set to satisfy the above relationship, that is, the central angle corresponding to the guide portion of the to-be-flattened member 322 that is not guided by the elastic piece is set to satisfy the above relationship. In this way, the risk of wrinkles and poor flattening effect due to that a large area of the to-be-flattened member 322 is not guided by the elastic piece 421 can be reduced.

In some embodiments, an edge portion of the second end 4212a is provided with a thinned area 421b. The thinned area 421b has a thickness increasing in a direction approaching the support plane 41a along the central axis X.

In this way, along the thinned area 421b from the side close to the central axis X to the side away from the central axis X, the thickness of the thinned area 421b gradually decreases. From the end of the thinned area 421b close to the central axis X to the end away from the central axis X, the diameter of a circular envelope enclosed by the thinned areas 421b of the plurality of elastic pieces 421 gradually increases. When the to-be-flattened member 322 moves relative to the thinned area 421b, the thinned area 421b can provide better guidance for the bending of the to-be-flattened member 322.

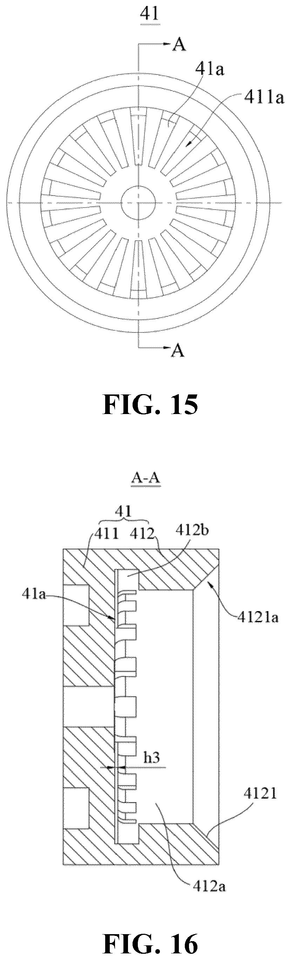

Fig. 15 shows a front view of a mounting seat 41 in an elastic guide assembly provided in some embodiments of the present application; and Fig. 16 is a schematic structural cross-sectional view taken along A-A of Fig. 15.

As shown in Figs. 15 and 16, in some embodiments, the mounting seat 41 includes an end plate 411 and an enclosure portion 412. The end plate 411 has the support plane 41a, and the enclosure portion 412 is arranged in an enclosing manner on a peripheral side of the support plane 41a, so as to form a guide cavity 412a for guiding the to-be-flattened end 32a to move in a direction along the central axis X.

Specifically, the elastic guide assembly 42 is arranged in the guide cavity 412a. When the cylindrical electrode assembly 32 squeezes the elastic guide assembly 42 in the direction of the support plane 41a, the cylindrical electrode assembly 32 can move toward the support plane 41a in the direction along the central axis X. In this way, an inner wall of the enclosure portion 412 can be used as a guide component for the movement of the to-be-flattened end 32a along the central axis X, so as to improve the coaxiality of the movement of the cylindrical electrode assembly 32 in the direction along the central axis X and improve the stability of the movement of the cylindrical electrode assembly 32 relative to the inclined surface 42a, thereby facilitating the improvement of the flattening effect of the elastic guide assembly 42 on the to-be-flattened member 322.

In some embodiments, a guide portion 4121 is provided on a side of the enclosure portion 412 away from the end plate 411, an inner wall of the guide portion 4121 encloses a tapered hole 4121a in communication with the guide cavity 412a, and the tapered hole 4121a has an inner diameter gradually decreasing from a side of the guide portion 4121 away from the end portion to a side close to the end plate 411.

In some embodiments, the guide portion 4121 may be chamfered in a plane or in an arc shape.

In this way, when the to-be-flattened end 32a of the cylindrical electrode assembly 32 just enters the guide cavity 412a, the diameter of the guide cavity 412a is large, which is helpful for the to-be-flattened end 32a to enter the guide cavity 412a smoothly, and during the passage of the to-be-flattened end 32a through the guide portion 4121, the guide portion 4121 can provide a certain guidance for the to-be-flattened end 32a, so as to improve the smoothness of the to-be-flattened end 32a entering the guide cavity 412a.

In some embodiments, an avoidance groove 412b is provided on an inner wall of an end of the enclosure portion 412 connected to the end plate 411, and the avoidance groove 412b is configured to avoid the elastic guide assembly 42 when the inclined surface 42a is pressed and deformed.

In some embodiments, the avoidance groove 412b may be provided in an annular shape along the peripheral side of the enclosure portion 412, or each elastic piece 421 may be configured to correspond to one avoidance groove 412b. That is, a plurality of avoidance grooves 412b are provided spaced apart from each other along the peripheral side of the enclosure portion 412.

In an embodiment in which the first end 4211a of the elastic piece 421 is fixed and the second end 4212a thereof is free, as the cylindrical electrode assembly 32 squeezes the elastic piece 421, the second end 4212a of the elastic piece 421 moves along the inner wall of the enclosure portion 412 in the direction approaching the support plane 41a, until the second end 4212a enters the avoidance groove 412b such that the entire elastic piece 421 abuts against the support plane 41a.

Therefore, the enclosure portion 412 is configured to be provided with an avoidance groove 412b, so that as the elastic piece 421 is gradually deformed, it is convenient for the elastic piece 421 to abut against the support plane 41a after being squeezed, facilitating the smooth progress of the flattening operation of the to-be-flattened member 322.

In some embodiments, referring to Figs. 7, 9, 12 and 16, in the direction along the central axis X, the dimension of the avoidance groove 412b is defined as h1, the elastic guide assembly 42 includes a plurality of elastic pieces 421, the plurality of elastic pieces 421 are arranged around the central axis X, and the elastic pieces 421 are each arranged obliquely in a direction away from the support plane 41a from the first end 4211a of the elastic piece 421 close to the central axis X to the second end 4212a away from the central axis X. A surface of each elastic piece 421 facing away from the support plane 41a is formed as an inclined unit surface 421a, the inclined unit surfaces 421a cooperate with each other to define the inclined surface 42a, and thickness of the elastic piece 421 is defined as h2, where h1 ≥ h2.

It can be understood that setting of h1 ≥ h2 facilitates the second end 4212a of the elastic piece 421 to enter the avoidance groove 412b, so that the elastic piece 421 abuts against the support plane 41a.

In some embodiments, the support plane 41a of the end plate 411 is provided with a plurality of accommodating grooves 411a arranged facing away from the inclined surface 42a, and each of the accommodating grooves 411a is in communication with the avoidance groove 412b and configured to accommodate at least a part of the respective elastic piece 421.

In some embodiments, the shape of the accommodating groove 411a may be configured to match the shape of the elastic piece 421. In this way, during the deformation of the elastic piece 421, the first end 4211a moves along the support plane 41a in the accommodating groove 411a, and the accommodating groove 411a can provide guidance for the movement of the first end 4211a. Alternatively, when the first end 4211a is fixed and the second end 4212a moves, as the amount of elastic deformation of the elastic piece 421 increases, more parts of the elastic piece 421 are accommodated in the accommodating groove 411a. In this way, when the amount of deformation of the elastic piece 421 reaches the maximum, at least a part of the elastic piece 421 is accommodated in the accommodating groove 411a, and the elastic piece 421 cooperates with the support plane 41a to squeeze the bent to-be-flattened member 322. Due to the existence of the accommodating groove 411a, it is helpful to improve the cooperation between the elastic piece 421 and the support plane 41a to form a flatter squeezing surface to squeeze the to-be-flattened member 322 more evenly, thereby improving the flatness of the to-be-flattened member 322 after being squeezed.

As shown in Figs. 9 and 16, in some embodiments, in the direction along the central axis X, the depth of the accommodating groove 411a is defined as h3, where h3 = h2.

In this way, where the elastic piece 421 abuts against a bottom wall of the accommodating groove 411a, the surface of the elastic piece 421 is flush with the surface of the support plane 41a, so that the surface of the cooperating elastic piece 421 in contact with the bent to-be-flattened member 322 and the support plane 41a form a relatively smooth squeezing surface, further improving the flattening effect of the to-be-flattened member 322.

A guide and flattening device provided according to some embodiments of the present application includes the guide and flattening mechanism 40 provided in any of the above embodiments.

Due to the use of the guide and flattening mechanism 40 provided in some embodiments of the present application, the guide and flattening device provided in some embodiments of the present application have the same technical effects, which will not be described again here.

In some embodiments, the guide and flattening device further includes a clamping mechanism configured to clamp the cylindrical electrode assembly 32 such that the cylindrical electrode assembly 32 and the elastic guide assembly 42 of the guide and flattening mechanism 40 move toward each other, so as to guide the bending of the to-be-flattened member 322 by means of the inclined surface 42a of the elastic guide assembly 42 and flatten the to-be-flattened member 322 on the circular end surface 32b with the cooperation of the support plane 41a.

Specifically, the clamping mechanism cooperates with the guide and flattening mechanism 40 to realize the bending of the to-be-flattened member 322 along the inclined surface 42a, and the squeezing operation of the bent to-be-flattened member 322, so as to complete the flattening operation of the to-be-flattened member 322. The clamping mechanism may be an existing clamping manipulator or other mechanisms, which will not be described in detail.

Therefore, the provision of a clamping mechanism facilitates the improvement of the convenience of flattening operation of the to-be-flattened member 322 of the cylindrical electrode assembly 32.

It should be noted that the embodiments in the present application and the features of the embodiments can be combined with each other without conflict.

## Claims

1. A guide and flattening mechanism (40) for flattening a to-be-flattened member (322) on a to-be-flattened end (32a) of a cylindrical electrode assembly (32), such that the to-be-flattened member (322) is bent and abuts against a circular end surface (32b) of the to-be-flattened end (32a), the to-be-flattened member (322) being a part, which protrudes from the circular end surface (32b), of an annular tape attached to a side wall of the cylindrical electrode assembly (32), or a tab (321) on the to-be-flattened end (32a) that protrudes in an axial direction of the cylindrical electrode assembly (32), the guide and flattening mechanism (40) comprising:
a mounting seat (41) having a support plane (41a); and
an elastic guide assembly (42) arranged at the mounting seat (41) and having an inclined surface (42a);
wherein the inclined surface (42a) is arranged around a central axis (X) perpendicular to the support plane (41a) and is located on a side of the elastic guide assembly (42) facing away from the support plane (41a); from a side of the inclined surface (42a) close to the central axis (X) to a side of the inclined surface (42a) away from the central axis (X), at least a part of the inclined surface (42a) is arranged obliquely in a direction away from the support plane (41a); and
the inclined surface (42a) is configured to be elastically deformed in a direction approaching the support plane (41a) when being squeezed in the direction approaching the support plane (41a), so as to guide the bending of the to-be-flattened member (322) and flatten the to-be-flattened member (322) on the circular end surface (32b) with the cooperation of the support plane (41a).

2. The guide and flattening mechanism (40) according to claim 1, wherein the elastic guide assembly (42) comprises a plurality of elastic pieces (421), the plurality of elastic pieces (421) are arranged around the central axis (X), and the elastic pieces (421) are each arranged obliquely in a direction away from the support plane (41a) from a first end (4211a) of the elastic piece (421) close to the central axis (X) to a second end (4212a) away from the central axis (X); and a surface of each elastic piece (421) facing away from the support plane (41a) is formed with an inclined unit surface (421a), and the inclined unit surfaces (421a) cooperate with each other to define the inclined surface (42a).

3. The guide and flattening mechanism (40) according to claim 2, wherein the plurality of elastic pieces (421) is arranged in a circular array around the central axis (X), wherein the elastic pieces (421) are in the shape of a sector, or an annular sector arranged in a circular array around the central axis (X), wherein the number of elastic pieces (421) is n, and a central angle corresponding to each elastic piece (421) is α, where nα = 360°, and n is a positive integer greater than 1.

4. The guide and flattening mechanism (40) according to claims 2 to 3, wherein each elastic piece (421) comprises a first sub-section (4211) and a second sub-section (4212) connected to each other, the first sub-section (4211) has the first end (4211a) away from the second sub-section (4212), the first sub-section (4211) is arranged obliquely in a direction away from the support plane (41a) from the first end(4211a) to an end of the first sub-section (4211) connected to the second sub-section (4212), and a first inclined sub-surface (4211b) is formed on the first sub-section (4211), the second sub-section (4212) has the second end (4212a) away from the first sub-section (4211), the second sub-section (4212) is bent relative to the first sub-section (4211) and extends a preset distance in a direction away from the support plane (41a), and a second inclined sub-surface (4212b) is formed on the second sub-section (4212), wherein the second inclined sub-surface (4212b) is connected to the first inclined sub-surface (4211b) in a smooth-transition manner to form the inclined unit surface (421a).

5. The guide and flattening mechanism (40) according to any one of claims 2 to 4, wherein the first end (4211a) is a fixed end, the second end (4212a) is a free end, and each elastic piece (421) is configured to move the second end (4212a) toward the support plane (41a) when being squeezed in a direction approaching the support plane (41a).

6. The guide and flattening mechanism (40) according to claim 5, wherein the elastic guide assembly (42) further comprises a support shaft (422) connected to the mounting seat (41), and the first ends (4211a) of the plurality of elastic pieces (421) are connected to a peripheral surface of the support shaft (422) and are arranged evenly spaced apart from each other in a circumferential direction of the support shaft (422).

7. The guide and flattening mechanism (40) according to any one of claims 2 to 4, wherein the first end (4211a) is a free end, the second end (4212a) is a fixed end, and each elastic piece (421) is configured to move the first end (4211a) in a direction away from the central axis (X) when being squeezed in a direction approaching the support plane (41a).

8. The guide and flattening mechanism (40) according to any one of claims 2 to 7, wherein among the plurality of elastic pieces (421) arranged in a circular array, an included angle β between two adjacent elastic pieces (421) satisfies: β ≤ 30°.

9. The guide and flattening mechanism (40) according to any one of claims 2 to 8, wherein an edge portion of the second end (4212a) is provided with a thinned area (421b) having a thickness increasing in a direction approaching the support plane (41a) along the central axis (X).

10. The guide and flattening mechanism (40) according to any one of claims 1 to 9, wherein the mounting seat (41) comprises an end plate(411) and an enclosure portion (412), the end plate (411) has the support plane (41a), and the enclosure portion (412) is arranged in an enclosing manner on a peripheral side of the support plane (41a), so as to form a guide cavity (412a) for guiding the to-be-flattened end (32a) to move in a direction along the central axis (X).

11. The guide and flattening mechanism (40) according to claim 10, wherein a guide portion (4121) is provided on a side of the enclosure portion (412) away from the end plate (411), an inner wall of the guide portion (4121) encloses a tapered hole (4121a) in communication with the guide cavity (412a), and the tapered hole (4121a) has an inner diameter gradually decreasing from a side of the guide portion (4121) away from the end plate (411) to a side close to the end plate (411).

12. The guide and flattening mechanism (40) according to claim 10 or 11, wherein an avoidance groove (412b) is provided on an inner wall of an end of the enclosure portion (412) connected to the end plate (411), and the avoidance groove (412b) is configured to avoid the elastic guide assembly (42) when the inclined surface (42a) is pressed and deformed.

13. **The** guide and flattening mechanism (40) according to claim 12, wherein the dimension of the avoidance groove (412b) in the direction along the central axis (X) is defined as h1; and
the elastic guide assembly (42) comprises a plurality of elastic pieces (421), the plurality of elastic pieces (421) are arranged around the central axis (X), and the elastic pieces (421) are each arranged obliquely in a direction away from the support plane (41a) from a first end (4211a) of the elastic piece (421) close to the central axis (X) to a second end (4212a) away from the central axis (X); and a surface of each elastic piece (421) facing away from the support plane (41a) is formed as an inclined unit surface (421a), the inclined unit surfaces (421a) cooperate with each other to define the inclined surface (42a), and thickness of each elastic piece (421) is defined as h2, where h1 ≥ h2, wherein the support plane (41a) of the end plate (411) is provided with a plurality of accommodating grooves (411a) arranged facing away from the inclined surface (42a), and each of the accommodating grooves (411a) is in communication with the avoidance groove (412b) and configured to accommodate at least a part of the respective elastic piece (421), wherein in the direction along the central axis (X), the depth of the accommodating groove (411a) is defined as h3, where h3 = h2.

14. A guide and flattening device, comprising a guide and flattening mechanism (40) of any one of claims 1 to 13.

15. The guide and flattening device according to claim 14, further comprising:
a clamping mechanism configured to clamp the cylindrical electrode assembly (32) such that the cylindrical electrode assembly (32) and the elastic guide assembly (42) of the guide and flattening mechanism (40) move toward each other, so as to guide the bending of the to-be-flattened member (322) by means of the inclined surface (42a) of the elastic guide assembly (42) and flatten the to-be-flattened member (322) on the circular end surface (32b) with the cooperation of the support plane (41a).

## Patentansprüche

1. Führungs- und Glättungsmechanismus (40) zum derartigen Glätten eines zu glättenden Elements (322) an einem zu glättenden Ende (32a) einer zylinderförmigen Elektrodenbaugruppe (32), dass das zu glättende Element (322) gebogen ist und an einer kreisförmigen Stirnfläche (32b) des zu glättenden Endes (32a) anliegt, wobei es sich bei dem zu glättenden Element (322) um einen von der kreisförmigen Stirnfläche (32b) vorstehenden Teil eines an einer Seitenwand der zylinderförmigen Elektrodenbaugruppe (32) angebrachten ringförmigen Streifens handelt oder um eine Kontaktfahne (321) an dem zu glättenden Ende (32a), die in axialer Richtung der zylinderförmigen Elektrodenbaugruppe (32) vorsteht, wobei der Führungs- und Glättungsmechanismus (40) Folgendes umfasst:
einen Befestigungssitz (41) mit einer Auflageebene (41a) und
eine elastische Führungsbaugruppe (42), die an dem Befestigungssitz angeordnet ist und eine Schräge (42a) aufweist,
wobei die Schräge (42a) um eine senkrecht zur Auflageebene (41a) verlaufende Mittelachse (X) herum angeordnet ist und sich auf einer von der Auflageebene (41a) weg weisenden Seite der elastischen Führungsbaugruppe (42) befindet, wobei zumindest ein Teil der Schräge (42a) von einer in der Nähe der Mittelachse (X) liegenden Seite der Schräge (42a) zu einer von der Mittelachse (X) entfernt liegenden Seite der Schräge (42a) in einer von der Auflagefläche (41a) weg führenden Richtung schräg angeordnet ist, und
die Schräge (42a) so konfiguriert ist, dass sie sich in einer Richtung zur Auflageebene (41a) hin elastisch verformen kann, wenn sie in die Richtung zur Auflageebene (41a) gedrückt wird, und so das Biegen des zu glättenden Elements (322) lenkt und unter Mitwirkung der Auflageebene (41a) das zu glättende Element (322) an der kreisförmigen Stirnfläche (32b) glättet.

2. Führungs- und Glättmechanismus (40) nach Anspruch 1, wobei die elastische Führungsbaugruppe (42) mehrere elastische Teilstücke (421) umfasst, wobei die mehreren elastischen Teilstücke (421) um die Mittelachse (X) herum angeordnet sind, und die elastischen Teilstücke (421) von einem ersten Ende (4211a) des elastischen Teilstücks (421) in der Nähe der Mittelachse (X) zu einem von der Mittelachse (X) entfernt liegenden, zweiten Ende (4212a) jeweils in einer von der Auflageebene (41a) weg weisenden Richtung schräg angeordnet sind, und eine Fläche jedes elastischen Teilstücks (421), die von der Auflageebene (41a) weg weist, mit einer Teilschräge (421a) ausgebildet ist und die Teilschrägen (421a) zusammen die Schräge (42a) definieren.

3. Führungs- und Glättmechanismus (40) nach Anspruch 2, wobei die mehreren elastischen Teilstücke (421) kreisförmig um die Mittelachse (X) angeordnet sind, wobei die elastischen Teilstücke (421) die Form eines Ausschnitts oder eines Kreisausschnitts aufweisen, der kreisförmig um die Mittelachse (X) angeordnet ist, wobei die Anzahl der elastischen Teilstücke (421) n und ein jedem elastischen Teilstück (421) entsprechender Mittelpunktswinkel α ist, wobei nα = 360° und n eine positive Ganzzahl größer 1 ist.

4. Führungs- und Glättmechanismus (40) nach Anspruch 2 bis 3, wobei jedes elastische Teilstück (421) einen ersten Teilabschnitt (4211) und einen zweiten Teilabschnitt (4212) umfasst, die miteinander verbunden sind, wobei das erste Ende (4211a) des ersten Teilabschnitts (4211) von dem zweiten Teilabschnitt (4212) entfernt liegt, der erste Teilabschnitt (4211) in einer von der Auflageebene (41a) weg weisenden Richtung von dem ersten Ende (4211a) zu einem mit dem zweiten Teilabschnitt (4212) verbundenen Ende des ersten Teilabschnitts (4211) schräg angeordnet ist und an dem ersten Teilabschnitt (4211) eine erste Teilschräge (4211b) ausgebildet ist, wobei das zweite Ende (4212a) des zweiten Teilabschnitts (4212) von dem ersten Teilabschnitt (4211) entfernt liegt, der zweite Teilabschnitt (4212) in Bezug auf den ersten Teilabschnitt (4211) gebogen ist und sich um eine vorgegebene Distanz in einer von der Auflageebene (41a) weg führenden Richtung erstreckt und eine zweite Teilschräge (4212b) an dem zweiten Teilabschnitt (4212) ausgebildet ist, wobei die zweite Teilschräge (4212b) nahtlos in die erste Teilschräge (4211b) übergeht und so die Teilschräge (421a) gebildet wird.

5. Führungs- und Glättmechanismus (40) nach einem der Ansprüche 2 bis 4, wobei es sich bei dem ersten Ende (4211a) um ein festes Ende und bei dem zweiten Ende (4212a) um ein freies Ende handelt und jedes elastische Teilstück (421) so konfiguriert ist, dass es das zweite Ende (4212a) zur Auflageebene (41a) hin bewegt, wenn es in eine Richtung zur Auflageebene (41a) hin gedrückt wird.

6. Führungs- und Glättmechanismus (40) nach Anspruch 5, wobei die elastische Führungsbaugruppe (42) ferner einen Träger (422) umfasst, der mit dem Befestigungssitz (41) verbunden ist, und die ersten Enden (4211a) der mehreren elastischen Teilstücke (421) mit einer Umfangsfläche des Trägers (422) verbunden und in Umfangsrichtung des Trägers (422) in gleichmäßigen Abständen zueinander angeordnet sind.

7. Führungs- und Glättmechanismus (40) nach einem der Ansprüche 2 bis 4, wobei es sich bei dem ersten Ende (4211a) um ein freies Ende und bei dem zweiten Ende (4212a) um ein festes Ende handelt und jedes elastische Teilstück (421) so konfiguriert ist, dass es das erste Ende (4211a) in eine Richtung von der Mittelachse (X) weg bewegt, wenn es in eine Richtung zur Auflageebene (41a) hin gedrückt wird.

8. Führungs- und Glättmechanismus (40) nach einem der Ansprüche 2 bis 7, wobei bei den mehreren kreisförmig angeordneten, elastischen Teilstücken (421) ein eingeschlossener Winkel β zwischen zwei benachbarten elastischen Teilstücken (421) β ≤ 30° entspricht.

9. Führungs- und Glättmechanismus (40) nach einem der Ansprüche 2 bis 8, wobei ein Randabschnitt des zweiten Endes (4212a) mit einem dünneren Bereich (421b) versehen ist, dessen Dicke entlang der Mittelachse (X) in einer Richtung zur Auflageebene (41a) hin zunimmt.

10. Führungs- und Glättmechanismus (40) nach einem der Ansprüche 1 bis 9, wobei der Befestigungssitz (41) eine Endplatte (411) und einen Umhüllungsabschnitt (412) umfasst, die Endplatte (411) die Auflageebene (41a) aufweist und der Umhüllungsabschnitt (412) an einer Umfangsseite der Auflageebene (41a) auf umhüllende Weise angeordnet ist und so ein Führungshohlraum (412a) zum Lenken des zu glättenden Endes (32a) in eine Richtung entlang der Mittelachse (X) gebildet wird.

11. Führungs- und Glättmechanismus (40) nach Anspruch 10, wobei auf einer von der Endplatte (411) weg weisenden Seite des Umhüllungsabschnitts (412) ein Führungsabschnitt (4121) vorgesehen ist, eine Innenwand des Führungsabschnitts (4121) ein konisches Loch (4121a) umhüllt, das mit dem Führungshohlraum (412a) in Verbindung steht, und das konische Loch (4121a) einen Innendurchmesser aufweist, der sich von einer von der Endplatte (411) weg weisenden Seite des Führungsabschnitts (4121) aus zu einer Seite in der Nähe der Endplatte (411) hin allmählich verringert.

12. Führungs- und Glättmechanismus (40) nach Anspruch 10 oder 11, wobei an einer Innenwand eines mit der Endplatte (411) verbundenen Endes des Umhüllungsabschnitts (412) eine Ausweichnut (412b) vorgesehen ist und die Ausweichnut (412b) so konfiguriert ist, dass die elastische Führungsbaugruppe (42) dorthin ausweichen kann, wenn die Schräge (42a) gedrückt und verformt wird.

13. Führungs- und Glättmechanismus (40) nach Anspruch 12, wobei die Abmessung der Ausweichnut (412b) in Richtung entlang der Mittelachse (X) als h1 definiert ist und die elastische Führungsbaugruppe (42) mehrere elastische Teilstücke (421) umfasst, wobei die mehreren elastischen Teilstücke (421) um die Mittelachse (X) herum angeordnet sind, und die elastischen Teilstücke (421) in einer von der Auflageebene (41a) weg weisenden Richtung von einem ersten Ende (4211a) des elastischen Teilstücks (421) in der Nähe der Mittelachse (X) zu einem von der Mittelachse (X) entfernt liegenden zweiten Ende (4212a) jeweils schräg angeordnet sind, und eine von der Auflageebene (41a) weg weisende Fläche jedes elastischen Teilstücks (421) als Teilschräge (421a) ausgebildet ist, wobei die Teilschrägen (421a) zusammen die Schräge (42a) definieren und eine Dicke jedes elastischen Teilstücks (421) als h2 definiert ist, wobei h1 ≥ h2, wobei die Auflagefläche (41a) der Endplatte (411) mit mehreren Aufnahmenuten (411a) versehen ist, die von der Schräge (42a) weg weisend angeordnet sind, und jede der Aufnahmenuten (411a) mit der Ausweichnut (412b) in Verbindung steht und so konfiguriert ist, dass sie zumindest einen Teil des jeweiligen elastischen Teilstücks (421) aufnimmt, wobei die Tiefe der Aufnahmenut (411a) in Richtung entlang der Mittelachse (X) als h3 definiert ist, wobei h3 = h2.

14. Führungs- und Glättvorrichtung, die einen Führungs- und Glättmechanismus (40) nach einem der Ansprüche 1 bis 13 umfasst.

15. Führungs- und Glättvorrichtung nach Anspruch 14, die ferner Folgendes umfasst: einen Klemmmechanismus, der so konfiguriert ist, dass er die zylinderförmige Elektrodenbaugruppe (32) so festklemmt, dass sich die zylinderförmige Elektrodenbaugruppe (32) und die elastische Führungsbaugruppe (42) des Führungs- und Glättmechanismus (40) aufeinander zu bewegen und so das Biegen des zu glättenden Elements (322) mithilfe der Schräge (42a) der elastischen Führungsbaugruppe (42) gelenkt und das zu glättende Element (322) unter Mitwirkung der Auflagefläche (41a) an der kreisförmigen Stirnfläche (32b) geglättet wird.

## Revendications

1. Mécanisme de guidage et d'aplatissement (40) destiné à aplatir un élément à aplatir (322) sur une extrémité à aplatir (32a) d'un ensemble électrode cylindrique (32), de sorte que l'élément à aplatir (322) soit plié et vienne en butée contre une surface d'extrémité circulaire (32b) de l'extrémité à aplatir (32a), l'élément à aplatir (322) étant une partie, qui fait saillie à partir de la surface d'extrémité circulaire (32b), d'une bande annulaire fixée à une paroi latérale de l'ensemble électrode cylindrique (32), ou une languette (321), sur l'extrémité à aplatir (32a) qui fait saillie dans une direction axiale de l'ensemble électrode cylindrique (32), le mécanisme de guidage et d'aplatissement (40) comprenant :
un siège de montage (41) présentant un plan de support (41a) ; et
un ensemble de guidage élastique (42) agencé au niveau du siège de montage (41) et présentant une surface inclinée (42a) ;
dans lequel la surface inclinée (42a) est agencée autour d'un axe central (X) perpendiculaire au plan de support (41a) et est située sur un côté de l'ensemble de guidage élastique (42) orienté à l'opposé du plan de support (41a) ; d'un côté de la surface inclinée (42a) à proximité de l'axe central (X) à un côté de la surface inclinée (42a) à l'opposé de l'axe central (X), au moins une partie de la surface inclinée (42a) est agencée de manière oblique dans une direction à l'opposé du plan de support (41a) ; et
la surface inclinée (42a) est configurée pour être élastiquement déformée dans une direction s'approchant du plan de support (41a) lorsqu'elle est pressée dans la direction s'approchant du plan de support (41a), de manière à guider le pliage de l'élément à aplatir (322) et à aplatir l'élément à aplatir (322) sur la surface d'extrémité circulaire (32b) avec la coopération du plan de support (41a).

2. Mécanisme de guidage et d'aplatissement (40) selon la revendication 1, dans lequel l'ensemble de guidage élastique (42) comprend une pluralité de pièces élastiques (421), la pluralité de pièces élastiques (421) étant agencées autour de l'axe central (X), et les pièces élastiques (421) étant chacune agencées de manière oblique dans une direction à l'opposé du plan de support (41a) d'une première extrémité (4211a) de la pièce élastique (421) à proximité de l'axe central (X) à une seconde extrémité (4212a) à l'opposé de l'axe central (X) ; et une surface de chaque pièce élastique (421) orientée à l'opposé du plan de support (41a) est formée avec une surface unitaire inclinée (421a), et les surfaces unitaires inclinées (421a) coopèrent les unes avec les autres pour définir la surface inclinée (42a).

3. Mécanisme de guidage et d'aplatissement (40) selon la revendication 2, dans lequel la pluralité de pièces élastiques (421) sont agencées en un réseau circulaire autour de l'axe central (X), dans lequel les pièces élastiques (421) sont sous la forme d'un secteur, ou un secteur annulaire agencé en un réseau circulaire autour de l'axe central (X), dans lequel le nombre de pièces élastiques (421) est n, et un angle central correspondant à chaque pièce élastique (421) est α, où nα = 360°, et n est un entier positif supérieur à 1.

4. Mécanisme de guidage et d'aplatissement (40) selon les revendications 2 à 3, dans lequel chaque pièce élastique (421) comprend une première sous-section (4211) et une seconde sous-section (4212) raccordées l'une à l'autre, la première sous-section (4211) présente la première extrémité (4211a) à l'opposé de la seconde sous-section (4212), la première sous-section (4211) est agencée de manière oblique dans une direction à l'opposé du plan de support (41a) de la première extrémité (4211a) à une extrémité de la première sous-section (4211) raccordée à la seconde sous-section (4212), et une première sous-surface inclinée (4211b) est formée sur la première sous-section (4211), la seconde sous-section (4212) présente la seconde extrémité (4212a) à l'opposé de la première sous-section (4211), la seconde sous-section (4212) est pliée par rapport à la première sous-section (4211) et s'étend sur une distance prédéfinie dans une direction à l'opposé du plan de support (41a), et une seconde sous-surface inclinée (4212b) est formée sur la seconde sous-section (4212), dans lequel la seconde sous-surface inclinée (4212b) est raccordée à la première sous-surface inclinée (4211b) sous la forme d'une transition lisse pour former la surface unitaire inclinée (421a).

5. Mécanisme de guidage et d'aplatissement (40) selon l'une quelconque des revendications 2 à 4, dans lequel la première extrémité (4211a) est une extrémité fixe, la seconde extrémité (4212a) est une extrémité libre, et chaque pièce élastique (421) est configurée pour déplacer la seconde extrémité (4212a) en direction du plan de support (41a) lorsqu'elle est pressée dans une direction s'approchant du plan de support (41a).

6. Mécanisme de guidage et d'aplatissement (40) selon la revendication 5, dans lequel l'ensemble de guidage élastique (42) comprend en outre un arbre de support (422) raccordé au siège de montage (41), et les premières extrémités (4211a) de la pluralité de pièces élastiques (421) sont raccordées à une surface périphérique de l'arbre de support (422) et sont agencées espacées de manière égale les unes des autres dans une direction circonférentielle de l'arbre de support (422).

7. Mécanisme de guidage et d'aplatissement (40) selon l'une quelconque des revendications 2 à 4, dans lequel la première extrémité (4211a) est une extrémité libre, la seconde extrémité (4212a) est une extrémité fixe, et chaque pièce élastique (421) est configurée pour déplacer la première extrémité (4211a) dans une direction opposée à l'axe central (X) lorsqu'elle est pressée dans une direction s'approchant du plan de support (41a).

8. Mécanisme de guidage et d'aplatissement (40) selon l'une quelconque des revendications 2 à 7, dans lequel parmi la pluralité de pièces élastiques (421) agencées en un réseau circulaire, un angle inclus β entre deux pièces élastiques adjacentes (421) satisfait : β ≤ 30°.

9. Mécanisme de guidage et d'aplatissement (40) selon l'une quelconque des revendications 2 à 8, dans lequel une partie de bord de la seconde extrémité (4212a) est dotée d'une zone amincie (421b) présentant une épaisseur augmentant dans une direction s'approchant du plan de support (41a) le long de l'axe central (X).

10. Mécanisme de guidage et d'aplatissement (40) selon l'une quelconque des revendications 1 à 9, dans lequel le siège de montage (41) comprend une plaque d'extrémité (411) et une partie enceinte (412), la plaque d'extrémité (411) présente le plan de support (41a), et la partie enceinte (412) est agencée de manière englobante sur un côté périphérique du plan de support (41a), de manière à former une cavité de guidage (412a) permettant de guider le déplacement de l'extrémité à aplatir (32a) dans une direction le long de l'axe central (X).

11. Mécanisme de guidage et d'aplatissement (40) selon la revendication 10, dans lequel une partie de guidage (4121) est disposée sur un côté de la partie enceinte (412) à l'opposé de la plaque d'extrémité (411), une paroi interne de la partie de guidage (4121) englobe un trou conique (4121a) en communication avec la cavité de guidage (412a), et le trou conique (4121a) présente un diamètre interne diminuant progressivement d'un côté de la partie de guidage (4121) à l'opposé de la plaque d'extrémité (411) à un côté proche de la plaque d'extrémité (411).

12. Mécanisme de guidage et d'aplatissement (40) selon la revendication 10 ou 11, dans lequel une rainure d'évitement (412b) est disposée sur une paroi interne d'une extrémité de la partie enceinte (412) raccordée à la plaque d'extrémité (411), et la rainure d'évitement (412b) est configurée pour éviter l'ensemble de guidage élastique (42) lorsque la surface inclinée (42a) est pressée et déformée.

13. Mécanisme de guidage et d'aplatissement (40) selon la revendication 12, dans lequel la dimension de la rainure d'évitement (412b) dans la direction le long de l'axe central (X) est définie comme h1 ; et
l'ensemble de guidage élastique (42) comprend une pluralité de pièces élastiques (421), la pluralité de pièces élastiques (421) est agencée autour de l'axe central (X), et les pièces élastiques (421) sont chacune agencées de manière oblique dans une direction opposée au plan de support (41a) d'une première extrémité (4211a) de la pièce élastique (421) à proximité de l'axe central (X) à une seconde extrémité (4212a) à l'opposé de l'axe central (X) ; et une surface de chaque pièce élastique (421) orientée à l'opposé du plan de support (41a) est formée comme une surface unitaire inclinée (421a), les surfaces unitaires inclinées (421a) coopèrent les unes avec les autres pour définir la surface inclinée (42a), et l'épaisseur de chaque pièce élastique (421) est définie comme h2, où h1 ≥ h2, dans lequel le plan de support (41a) de la plaque d'extrémité (411) est doté d'une pluralité de rainures de réception (411a) agencées orientées à l'opposé de la surface inclinée (42a), et chacune des rainures de réception (411a) est en communication avec la rainure d'évitement (412b) et configurée pour recevoir au moins une partie de la pièce élastique respective (421), dans lequel dans la direction le long de l'axe central (X), la profondeur de la rainure de réception (411a) est définie comme h3, où h3 = h2.

14. Dispositif de guidage et d'aplatissement, comprenant un mécanisme de guidage et d'aplatissement (40) selon l'une quelconque des revendications 1 à 13.

15. Dispositif de guidage et d'aplatissement selon la revendication 14, comprenant en outre :
un mécanisme de serrage configuré pour serrer l'ensemble électrode cylindrique (32) de sorte que l'ensemble électrode cylindrique (32) et l'ensemble de guidage élastique (42) du mécanisme de guidage et d'aplatissement (40) se déplacent l'un en direction de l'autre, de manière à guider le pliage de l'élément à aplatir (322) au moyen de la surface inclinée (42a) de l'ensemble de guidage élastique (42) et à aplatir l'élément à aplatir (322) sur la surface d'extrémité circulaire (32b) avec la coopération du plan de support (41a).
